# EUROPEAN PATENT SPECIFICATION

(11) **EP 1 473 674 B1**
(45) Date of publication and mention of the grant of the patent: **15.11.2006**
(21) Application number: 04250195.7
(22) Date of filing: 15.01.2004
(51) Int. Cl.: G06T 7/00

(54) **Improvements in or relating to dynamic medical imaging**
Verbesserungen in oder in Bezug auf dynamischer Bilderzeugung
Améliorations dans ou relatives à la production dynamique d'images médicales

(30) Priority: 15.01.2003 GB 0300921
(43) Date of publication of application: 03.11.2004
(73) Proprietor: Mirada Solutions Ltd, Oxford OX1 2ET (GB)
(72) Inventor: Behrenbruch, Christian Peter, Oxford, OX1 2ET (GB); Declerck, Jerome Marie Joseph, Oxford, OX1 2ET (GB); Brady, John Michael, Oxford, OX1 2ET (GB)
(74) Representative: Nicholls, Michael John

(56) References cited:
- US-A- 6 161 031
- DELZESCAUX T ET AL: "Adaptive and self-evaluating registration method for myocardial perfusion assessment" MAGN. RESON. MATER. PHYS. BIOL. MED. (NETHERLANDS), MAGNETIC RESONANCE MATERIALS IN PHYSICS, BIOLOGY AND MEDICINE, AUG. 2001, ELSEVIER, NETHERLANDS, vol. 13, no. 1, 2001, pages 28-39, XP002293518 ISSN: 1352-8661
- POSITANO V ET AL: "Automatic time sequence alignment in contrast enhanced MRI by maximization of mutual information" PROCEEDINGS OF THE 23RD. ANNUAL INTERNATIONAL CONFERENCE OF THE IEEE ENGINEERING IN MEDICINE AND BIOLOGY SOCIETY. 2001 CONFERENCE PROCEEDINGS. (EMBS). INSTANBUL, TURKEY, OCT. 25 - 28, 2001, ANNUAL INTERNATIONAL CONFERENCE OF THE IEEE ENGINEERING IN M, vol. VOL. 1 OF 4. CONF. 23, 25 October 2001 (2001-10-25), pages 2407-2410, XP010592138 ISBN: 0-7803-7211-5
- BUZUG T M ET AL: "Improving DSA images with an automatic algorithm based on template matching and an entropy measure" 1996, AMSTERDAM, NETHERLANDS, ELSEVIER, NETHERLANDS, 1996, pages 145-150, XP001199621 ISBN: 0-444-82497-9

## Description

The present invention relates to dynamic medical imaging, that is to say the acquisition of a plurality of time separated images of a subject in order to reveal some aspect of the medical condition of the subject.

Medical imaging is a technology that has evolved substantially over the past few decades with an increasing diversity of modalities - Magnetic Resonance Imaging (MRI), Computed Tomography (CT), Nuclear Medicine (NM) and Positron Emission Tomography (PET) - to name but a few. Although the traditional notion of medical imaging involves the acquisition of a "static" image that captures the anatomy of an organ/region of the body, increasingly the use of more sophisticated imaging techniques allows dynamic studies to be made which provide a temporal sequence of images which can characterise physiological or pathophysiological information.

Both static and dynamic medical imaging may involve the use of an imaging technique to increase selectively the contrast of a certain region in the image (e.g. on the basis of that region's structure or physiological state). For example, one may inject into a patient a compound which has a biophysical, molecular, genetic or cellular affinity for a particular organ, disease, state or physiological process. Such contrast agents are selected to have a property that provides enhanced information to a given imaging modality by altering imaging conditions (normally by altering the contrast) to reflect the behaviour of the compound in the body. This may be achieved via increased X-ray attenuation a localised site (e.g. for CT/X-ray), altered paramagnetic properties (e.g. for MRI) or the use of a radioisotope for nuclear medicine/PET. Such contrast agents are well-known for many imaging modalities. In some cases a technique may be used to create a contrast enhancement which does not rely on an injected contrast agent, for instance the use of "black blood" or "white blood" in magnetic resonance (MR) imaging (where specific pulse sequences are used to change the magnetic saturation of the blood and thus its appearance in the image), or tagged MR sequences which alter the magnetic behaviour of particular tissue or fluid. An injected contrast agent, or a tissue or fluid with altered behaviour, may all be regarded as "imaging agents".

Analysis of the behaviour of an imaging agent through imaging typically involves an acquisition process that takes many "snapshots" of the organ/region/body over time in order to capture the time-varying behaviour, e.g. distribution, of the agent and hence capture a specific biological state (disease, condition, physiological phenomenon, etc.). As the speed and digital nature of medical imaging evolves, this acquisition data can have tremendous temporal resolution and results in large quantities of data.

Additionally, there is a growing interest in not only imaging a particular physiological phenomenon to characterise a disease or condition, but also the in vivo assessment of the change in disease in response to therapy. This therapy may be surgical, pharmacological/genetic or radiotherapeutic in nature. Whether for diagnosis or treatment assessment purposes, dynamic imaging is a powerful clinical tool and has not only altered the landscape of medical imaging but has also made substantial inroads into drug discovery and animal applications.

Irrespective of the application, dynamic imaging with an imaging agent requires a temporal (multiple time epoch) acquisition during which the behaviour of the imaging agent is characterised. Sometimes this characterisation involves known physiological, cellular or genetic models that may have arbitrary interaction complexity. Sometimes this characterisation is performed using mathematical or statistical models that abstract true physiological meaning but which may enable certain parameters to be calculated which indicate the behaviour of the imaging agent and hence provide diagnostic information.

A patient may need to spend considerable time in an imaging device in order to acquire an image sequence. During this time, a patient may move - either due to natural bodily motion (respiration, "physiological tremor", etc) or as part of a symptom of disease (e.g. lack of motor control by an Alzheimer's patient). This motion necessarily corrupts the temporal accuracy of the imaging process, making it difficult to compare and, more critically, analyse individual regions of the imaging process.

Algorithms and clinical methods to address motion have long been a focus of research in medical imaging. Various techniques for motion correction, often involving registering images together to match corresponding locations in the image to each other, have been proposed, see for example WO 00/57361 and D. Rueckert, C. Hayes, C. Studholme, P. Summers, M. Leach, D. Hawkes, "Non-Rigid Registration of Breast MR Images Using Mutual Information", in Proc. MCCAI (Medical Image Computing and Computed Assisted Intervention), 1998, pp. 1144-1152, ISBN 3-540-65136-5, Springer Verlag. However such methods have failed to address the following issues:
1) The validity of the motion correction.
2) Feedback to the user about the quality of the motion correction in a region of interest.
3) Feedback to the motion correction process itself regarding correction quality and analytical usefulness of the motion correction data.

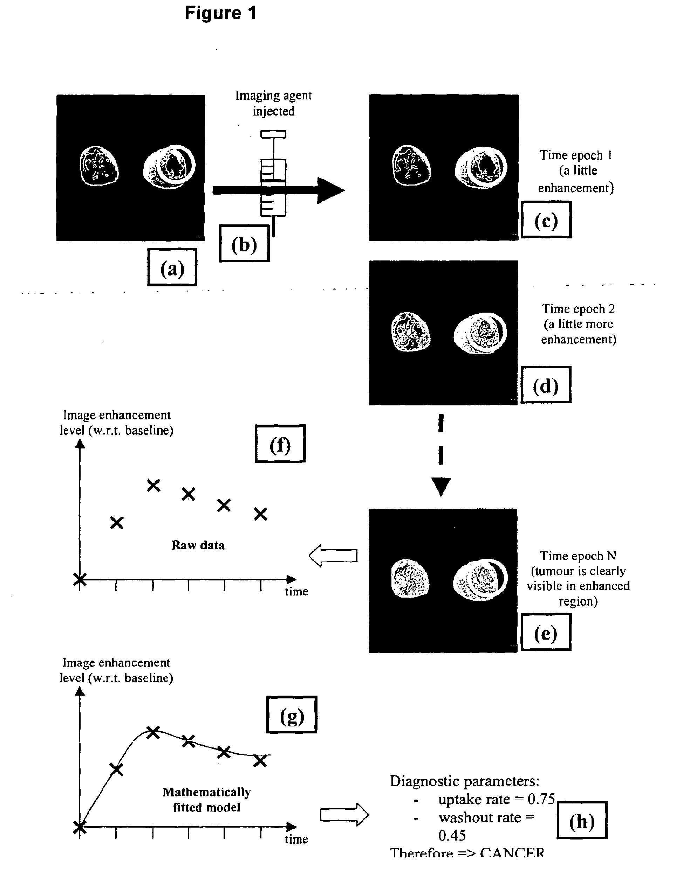

In virtually all dynamic imaging studies that involve an imaging agent, the behaviour of the agent can be mathematically characterised at some level or another. In the most simplistic fashion the behaviour of an imaging agent such as an injected compound may be analysed using a model of "uptake" and possibly subsequent "wash out", which may be linear or non-linear in nature. In more sophisticated instances, biophysical and pharmacokinetic understanding enables an imaging agent to be analysed using complex models that describe many different phases of behaviour and interaction. This is illustrated in Figure 1 of the accompanying drawings, which show a dynamic MR imaging sequence of the breast as a contrast agent is injected. The left breast (on the right in the displayed coronal slice) is the region of interest, where the suspicious area needs clinical investigation using contraced-enhanced MRI. Figure 1(a) illustrates the baseline image, that is to say with no imaging agent. Figure 1(b) schematically represents the injection of contrast agent and the enhancement of the breast starts in Figure 1(c), continues in Figure 1(d) and finishes later in Figure 1(e) with high enhancement of the breast. Figure 1(f) represents the amount of image enhancement of the circled region in the image of Figures 1 (a),(c), (d) and (e) plotted as a function of time. This can be fitted to the expected mathematical model of the uptake and washout rates of this contrast agent and from the fitted curve a value for the uptake rate and washout rate can be calculated. These values can be used to characterise the tissue in the circled region as cancerous or normal.

However, Figure 1 illustrates schematically the ideal case where there is no patient movement. If the patient moves, this adds noise or corrupts the imaging information that is used for this dynamic analysis. Without motion correction, it can be understood that this will change the values for apparent image enhancement at any particular part of the breast (because the values will not be referring to the same part of the breast before and after movement). Thus if patient motion occurs it is no longer possible to analyse accurately the temporal characteristics of an imaging process.

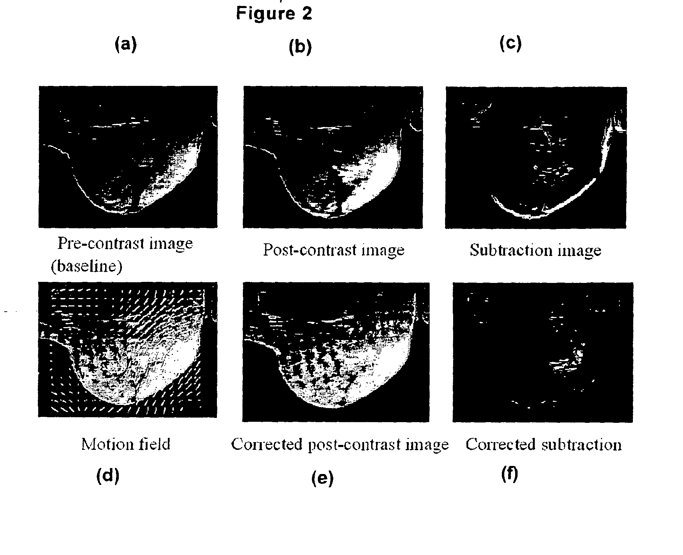

Figure 2 illustrates two sequences of images, a first in which motion is not corrected and a second in which motion is corrected. In the first sequence Figure 2(a) is a baseline (i.e. before injection of contrast agent) magnetic resonance image of another breast clinical case. Figure 2(b) shows the image after a gadolinium contrast agent has been injected. An easy way to judge the amount of enhancement, and thus isolate the tumourous region, is to subtract the two images of Figures 2(a) and 2(b). This results in the subtraction image of Figure 2(c). Unfortunately because the patient moved between the pre-contrast and post-contrast images of Figures 2(a) and 2(b), the subtraction image of Figure 2(c) contains many artefacts that suggest enhancement, but are in fact erroneous. One of the known motion correction techniques of registering the pre- and post-contrast images to each other can be used to find the motion field in the image. A suitable technique is disclosed in WO 00/57361 (herein incorporated by reference). The resulting motion field is shown in Figure 2(d). It can be seen that there is significant motion in the right-hand part of the breast, but no motion in the left-hand part. The post-contrast image can be motion corrected to remove the movement resulting in the corrected image of Figure 2(e), and then this is subtracted from the pre-contrast image of Figure 2(a). The corrected subtraction image is shown in Figure 2(f) and it can be seen that many motion artefacts have been removed (for example the highly visible artefacts around the edge of the breast in Figure 2(c)), and the region corresponding to contrast enhancement (for instance tumours) within the breast is more clearly visible.

The paper "Adaptive and self-evaluating registration method for myocardial perfusion assessment" by T. Delzescaux et al, Magn. Reson. Mater. Phys. Biol. Med. (NL); Magnetic Resonance Materials in Physics, Biology and Medecine, Aug 2001, vol. 13 No.1, 2001, p28-39 discloses a method of dynamic medical imaging on which the pre-characterizing portion of claim 1 is based.

Although such motion correction techniques are useful, they are often regarded with suspicion by clinicians. This is especially true of non-rigid, or deformable, corrections where clinicians worry that the changes introduced by the motion correction may disguise clinically significant features. This has lead to a slow take-up in practice of the advantages given by registration techniques.

The present invention provides a method of dynamic medical imaging in which the expected temporal characteristics of the imaging process, e.g. the model of behaviour of the imaging agent, is used to optimise a motion correction process, such as one of the known methods of registration, and to provide feedback to the user as to the quality of motion correction.

Thus the knowledge about the temporal behaviour of the imaged region can be used not only in the conventional diagnosis, but also to validate the motion correction. Further, if the motion correction is found by this method to be poor, it provides a way of identifying regions within the subject where the motion correction is poor, allowing them to be processed further, for instance using different parameters in the motion correction method. The invention also provides quality-control information to the user of the dynamic/temporal medical imaging study.

In more detail the present invention provides a method of dynamic medical imaging as defined in claim 1.

Thus the expected behaviour of the imaged region is used to measure the quality of the registration.

The images may be acquired in a process involving the use of an imaging agent. The imaging agent may be the subject's own tissue or fluid or a contrast agent which is administered to the subject as mentioned above.

The level of agreement between the measured and expected temporal behaviour may be displayed to the user, for instance overlying an image of the subject, for example as a colour wash with different colours or intensities indicating the level of agreement.

The method may further include the step of re-executing the image registration in regions of the image where the level of agreement is poor. This may be achieved by using different parameters, such as using a different resolution, different scale or different sized search windows in the registration process.

The model may be a temporal model of the take-up and wash-out of an imaging agent and the subject of the imaging process may be a living human, animal or plant.

The technique is applicable to any dynamic imaging technique such as magnetic resonance imaging, computed tomography, positron emission tomography, nuclear medicine, ultrasound, x-ray and optical imaging.

The invention may be embodied as a computer program comprising program code means for executing the registration, measurement and caculation steps on a programmed computer, and the invention extends to a computer readable storage medium carrying such a program and to a computer system programmed to execute the method.

The invention will be further described by way of example with reference to the accompanying drawings, in which:-
Figure 1(a) to (g) illustrate schematically the prior art concept of dynamic imaging using an imaging agent and the process of analysis;
Figures 2(a) to (f) illustrate two sequences of MR images of a contrast-enhanced breast illustrating the techniques of motion correction;
Figure 3(a) to (f) illustrates in similar fashion to Figure 1 the verification of the motion correction using the model of imaging agent behaviour;
Figure 4 illustrates a schematic flow diagram of the process of one embodiment of the invention; and
Figure 5 illustrates the application of one embodiment of the invention to a recalculation of motion correction.

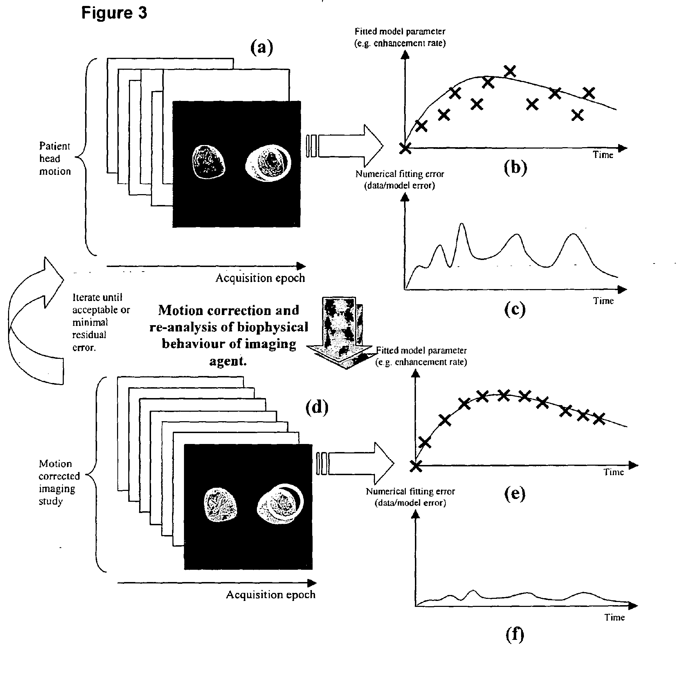

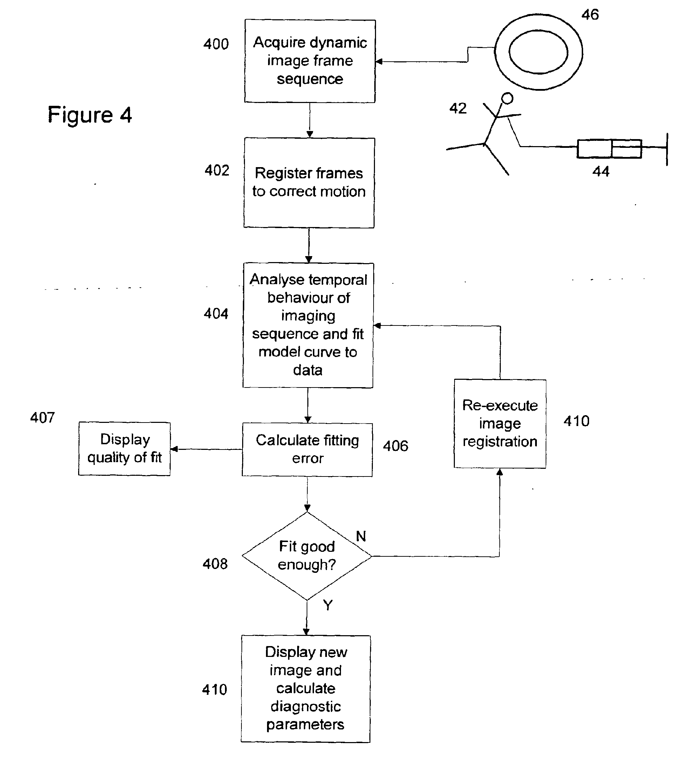

Referring to Figures 3 and 4 an embodiment of the invention based on the MR imaging technique of Figure 1 will be described. Firstly in step 400 of Figure 4 a dynamic image sequence is acquired from a patient 42 using an imaging apparatus 46 during injection of an imaging agent 44 such as Gadolinium DTPA (Diethyline Triamine Pentaacetic Acid). The sequence is illustrated schematically in Figure 3(a). It is assumed that there is some patient head motion in the imaging sequence. In step 402 a registration process is carried out to correct the patient motion. The technique may be that described in WO 00/57361. Then the temporal behaviour of the enhancement in a particular part of the image is measured in step 404 - the values of enhancement against time are plotted as crosses in Figure 3(b). The continuous line in Figure 3(b) illustrates the fitted model, for example in this case the fitted model of the enhancement rate for this imaging agent. Comparing this with Figure 1(g) it can be seen that the fit is quite poor, this being caused by patient movement. Figure 3(c) illustrates the numerical fitting error calculated in step 406, i.e. the difference between the value of the data point and the fitted curve.

Incidently, it is possible to apply steps 404 and 406 before applying any image registration algorithm, i.e. before step 402.

The amount of error is displayed in step 407, for example as an overlay whose colour and/or intensity indicate the level of error, or as lines whose length indicate the amount of error. This display gives the user an indication of the quality of the motion correction. If the fit is very poor, this is taken to indicate that there is a substantial degree of patient motion. On the other hand, if the fit is good, this indicates that the patient has not moved much. Obviously there may be different qualities of fit for different parts of the image where some parts of the subject moves but not others.

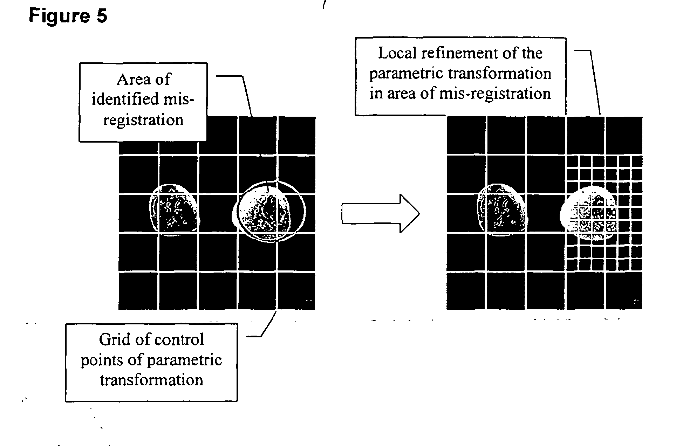

In this embodiment in regions of the image where the fit is not good enough as indicated by step 408, the motion correction is re-executed in step 410 and the model of the temporal behaviour of the imaging agent is fitted again to the data. The motion correction can be done by any of the following, for example:
a) addition of extra control points of a parametric transformation in areas or misalignment as shown in Figure 5;
b) locally loosening stiffness and regularisation constraints in areas of misalignment in the computation of a displacement field;
c) locally changing the scale of the displacement field characteristics; and
d) locally changing the characteristics of local block (size, search, step, etc.) in a block matching technique.

Steps 406, 408 and 410 are repeated iteratively until the residual error is acceptable or at a minimum. This is illustrated in Figures 3(d) and (e), where Figure 3(e) illustrates the corrected data points and the much better fit to the model curve. Figure 3(f) illustrates the residual error, now much lower than in Figure 3(c). When the fit is good enough the newly corrected motion image can be displayed in step 412 and the diagnostic parameters such as the wash-in rate and wash-out rate can be calculated taking into account the improved motion correction.

Thus the present invention combines the knowledge about the temporal behaviour of the imaging agent with the motion correction process in order not only to improve the motion correction process and give an indication of its quality, but also to produce ultimately a better motion corrected image which the temporal behaviour model fits, thus allowing a calculation of the diagnostic parameters even in regions of high patient motion.

The imaging agents usable with the present invention are any of those suitable for magnet resonance imaging, computed tomography, positron emission tomography, single photon emission computed tomography, nuclear medicine, ultrasound, x-ray (including angiography) and optical imaging, and include ligands/chelates tagged to paramagnetic compounds (for MRI), radio-labelled tracers/radio pharmaceuticals or nuclear medicine, ionic radiation attenuators for CT and x-ray, receptor-specific imaging agents for cellular behaviour and interactions, genetic markers (radio-labelled, luciferase-labelled etc), blood pool agents and vascular imaging agents.

The invention can be applied to two-dimensional or three-dimensional imaging processes.

## Claims

1. A method of dynamic medical imaging comprising the steps of:-
obtaining (400) a plurality of time separated images of the subject (42);
registering (402) the plurality of time separated images together to match corresponding locations in the images to each other;
measuring (404) from the registered images the temporal behaviour of an imaged region at a location in the subject (142); **characterised by**:
fitting (404) a model of the expected temporal behaviour of the imaged region to the measured temporal behaviour and calculating (406) the level of agreement between the fitted model and the measured temporal behaviour as a measure of the quality of the registration of the time separated images.

2. A method according to claim 1 wherein obtaining the images (400) involves the use of an imaging agent (44) and said model is a model of the temporal behaviour of the imaged region in the presence of the imaging agent (44).

3. A method according to claim 2 wherein the imaging agent (44) is a contrast agent.

4. A method according to any one of the preceding claims wherein the level of agreement between the measured temporal behaviour and the expected temporal behaviour is displayed (407).

5. A method according to claim 4 wherein the level of agreement is displayed overlying an image of the subject.

6. A method according to any one of the preceding claims further comprising re-executing (410) the step of registering the plurality of time separated images together in imaged regions where the level of agreement is poor.

7. A method according to claim 6 wherein the registration (410) uses a parameterised process and is re-executed using different registration parameters.

8. A method according to claim 6 or 7 wherein the registration (410) is re-executed at a different resolution.

9. A method according to claim 6, 7 or 8 wherein the registration (410) is re-executed at a different scale.

10. A method according to claim 6, 7, 8 or 9 wherein the registration (410) comprises searching through a search window defined in one of the images and the registration is re-executed using a different sized search window.

11. A method according to any one of the preceding claims wherein the model is a temporal model of the take-up and wash-out of an imaging agent (44) administered to the subject (42).

12. A method according to any one of the preceding claims wherein the subject (42) is a living human, animal or plant.

13. A method according to any one of the preceding claims wherein the images are acquired by one of magnetic resonance imaging, computed tomography, positron emission tomography, single photon emission computed tomography, nuclear medicine, ultrasound, x-ray and optical imaging.

14. A computer program comprising program code means for executing the steps in claim 1 of registering (402) the plurality of time separated images together to match corresponding locations in the images to each other; measuring (404) from the registered images the temporal behaviour at a location in the subject (42); fitting (404) the measured temporal behaviour to a model of the expected temporal behaviour and calculating (406) the level of agreement therebetween as a measure of the quality of the registration of the time separated images.

15. A computer program according to claim 14 further comprising program code means for executing the steps of any one of claims 3 to 10.

16. A computer readable storage medium carrying a computer program according to claim 14 or 15.

17. Dynamic medical image processing apparatus (46) adapted to execute the steps in claim 1 of registering (402) the plurality of time separated images together to match corresponding locations in the images to each other; measuring (404) from the registered images the temporal behaviour of the imaging agent at a location in the subject (42); fitting (404) the measured temporal behaviour of the imaging agent (44) to a model of the expected temporal behaviour and calculating (406) the level of agreement therebetween as a measure of the quality of the registration of the time separated images.

18. Dynamic medical image processing apparatus (46) according to claim 17, further adapted to execute the steps of any one of claims 4 to 11.

## Patentansprüche

1. Verfahren zur dynamischen medizinischen Bildgebung, welches folgende Schritte umfasst:
Erhalten (400) mehrerer zeitlich getrennter Bilder des Probanden (42);
Registrieren (402) der mehreren zeitlich getrennten Bilder miteinander, um entsprechende Stellen in den Bildern einander zuzuordnen;
Messen (404) anhand der registrierten Bilder des zeitlichen Verhaltens eines abgebildeten Bereichs an einer Stelle im Probanden (142), **gekennzeichnet durch**:
Anpassen (404) eines Models des erwarteten zeitlichen Verhaltens des abgebildeten Bereichs an das gemessene zeitliche Verhalten und Berechnen (406) des Werts der Übereinstimmung zwischen dem angepassten Modell und dem gemessenen zeitlichen Verhalten als Maß der Qualität der Registrierung der zeitlich getrennten Bilder.

2. Verfahren nach Anspruch 1, **dadurch gekennzeichnet, dass** das Erhalten der Bilder (400) die Verwendung eines bildgebenden Mittels (44) umfasst und das Modell ein Modell des zeitlichen Verhaltens des abgebildeten Bereichs bei Vorhandensein des bildgebenden Mittels (44) ist.

3. Verfahren nach Anspruch 2, **dadurch gekennzeichnet, dass** das bildgebende Mittel (44) ein Kontrastmittel ist.

4. Verfahren nach einem der vorhergehenden Ansprüche, **dadurch gekennzeichnet, dass** der Wert der Übereinstimmung zwischen dem gemessenen zeitlichen Verhalten und dem erwarteten zeitlichen Verhalten angezeigt wird (407).

5. Verfahren nach Anspruch 4, **dadurch gekennzeichnet, dass** der Wert der Übereinstimmung über einem Bild des Probanden liegend angezeigt wird.

6. Verfahren nach einem der vorhergehenden Ansprüche, welches weiterhin das erneute Ausführen (410) des Schritts des Registrierens der mehreren zeitlich getrennten Bilder miteinander in abgebildeten Bereichen umfasst, bei denen der Wert der Übereinstimmung mangelhaft ist.

7. Verfahren nach Anspruch 6, **dadurch gekennzeichnet, dass** die Registrierung (410) einen parametrisierten Prozess verwendet und mit Hilfe verschiedener Registrierungsparameter erneut ausgeführt wird.

8. Verfahren nach Anspruch 6 oder 7, **dadurch gekennzeichnet, dass** die Registrierung (410) bei einer anderen Auflösung erneut ausgeführt wird.

9. Verfahren nach Anspruch 6, 7 oder 8, **dadurch gekennzeichnet, dass** die Registrierung (410) bei einem anderen Maßstab erneut ausgeführt wird.

10. Verfahren nach Anspruch 6, 7, 8 oder 9, **dadurch gekennzeichnet, dass** die Registrierung (410) das Durchsuchen eines Suchfensters umfasst, das in einem der Bilder ausgebildet ist, und die Registrierung mit Hilfe eines anders bemessenen Suchfensters erneut ausgeführt wird.

11. Verfahren nach einem der vorhergehenden Ansprüche, **dadurch gekennzeichnet, dass** das Modell ein zeitliches Modell einer Aufnahme und eines Auswaschens eines dem Probanden (42) verabreichten bildgebenden Mittels (44) ist.

12. Verfahren nach einem der vorhergehenden Ansprüche, **dadurch gekennzeichnet, dass** der Proband (42) ein lebender Mensch, ein lebendes Tier oder eine lebende Pflanze ist.

13. Verfahren nach einem der vorhergehenden Ansprüche, **dadurch gekennzeichnet, dass** die Bilder durch eines von Magnetresonanzbildgebung, Computertomographie, Positronenemissionstomographie, Einzelphotonenemissionscomputertomomgraphie, Nuklearmedizin, Ultraschall, Röntgen und optischer Bildgebung erhalten werden.

14. Computerprogramm, welches Programmcodemittel zum Ausführen der Schritte in Anspruch 1 des Registrierens (402) der mehreren zeitlich getrennten Bilder miteinander zum Zuordnen entsprechender Stellen in den Bildern zueinander; des Messens (404) aus den registrierten Bildern des zeitlichen Verhaltens an einer Stelle im Proband (42); des Anpassens (404) des gemessenen zeitlichen Verhaltens an ein Modell des erwarteten zeitlichen Verhaltens und des Berechnens (406) des Werts der Übereinstimmung dazwischen als Maß der Qualität der Registrierung der zeitlich getrennten Bilder umfasst.

15. Computerprogramm nach Anspruch 14, welches weiterhin Programmcodemittel zum Ausführen der Schritte eines der Ansprüche 3 bis 10 umfasst.

16. Maschinell lesbares Speichermedium, das ein Computerprogramm nach Anspruch 14 oder 15 trägt.

17. Dynamische medizinische Bildverarbeitungsvorrichtung (46), die zum Ausführen der Schritte in Anspruch 1 des Registrierens (402) der mehreren zeitlich getrennten Bilder miteinander zum Zuordnen entsprechender Stellen in den Bildern zueinander; des Messens (404) anhand der registrierten Bilder des zeitlichen Verhaltens des bildgebenden Mittels an einer Stelle im Probanden (42); des Anpassens (404) des gemessenen zeitlichen Verhaltens des bildgebenden Mittels (44) an ein Modell des erwarteten zeitlichen Verhaltens und des Berechnens (406) des Werts der Übereinstimmung dazwischen als Maß der Qualität der Registrierung der zeitlich getrennten Bilder ausgelegt ist.

18. Dynamische medizinische Bildverarbeitungsvorrichtung (46) nach Anspruch 17, welche weiterhin dafür ausgelegt ist, die Schritte eines der Ansprüche 4 bis 11 auszuführen.

## Revendications

1. Procédé d'imagerie médicale dynamique comprenant les étapes consistant à :
obtenir (400) une pluralité d'images du sujet (42) séparées dans le temps ;
enregistrer (402) ensemble la pluralité d'images séparées dans le temps pour faire correspondre des emplacements dans les images les uns aux autres ;
mesurer (404) à partir des images enregistrées le comportement dans le temps d'une région soumise à imagerie dans un emplacement dans le sujet (142) ; **caractérisé par** l'étape consistant à :
adapter (404) un modèle du comportement dans le temps attendu de la région soumise à imagerie au comportement dans le temps mesuré et à calculer (406) le niveau de concordance entre le modèle adapté et le comportement dans le temps mesuré en tant que mesure de la qualité de l'enregistrement des images séparées dans le temps.

2. Procédé selon la revendication 1 dans lequel l'étape consistant à obtenir les images (400) implique l'utilisation d'un agent d'imagerie (44) et ledit modèle est un modèle du comportement dans le temps de la région soumise à imagerie en présence de l'agent d'imagerie (44).

3. Procédé selon la revendication 2 dans lequel l'agent d'imagerie (44) est un agent de contraste.

4. Procédé selon l'une quelconque des revendications précédentes, dans lequel le niveau de concordance entre le comportement dans le temps mesuré et le comportement dans le temps attendu est affiché (407).

5. Procédé selon la revendication 4 dans lequel le niveau de concordance est affiché recouvrant une image du sujet.

6. Procédé selon l'une quelconque des revendications précédentes comprenant en outre la ré-exécution (410) de l'étape d'enregistrement ensemble de la pluralité d'images séparées dans le temps dans des régions soumises à imagerie dans lesquelles le niveau de concordance est faible.

7. Procédé selon la revendication 6 dans lequel l'enregistrement (410) utilise un processus à paramètres et est ré-exécuté en utilisant des paramètres d'enregistrement différents.

8. Procédé selon la revendication 6 ou la revendication 7 dans lequel l'enregistrement (410) est ré-exécuté à une résolution différente.

9. Procédé selon la revendication 6, 7 ou 8, dans lequel l'enregistrement (410) est ré-exécuté à une échelle différente.

10. Procédé selon la revendication 6, 7, 8 ou 9 dans lequel l'enregistrement (410) comprend l'étape consistant à rechercher dans une fenêtre de recherche définie dans l'une des images et dans lequel l'enregistrement est ré-exécuté en utilisant une fenêtre de recherche d'une taille différente.

11. Procédé selon l'une quelconque des revendications précédentes dans lequel le modèle est un modèle temporel d'absorption et d'élimination d'un agent d'imagerie (44) administré au sujet (42).

12. Procédé selon l'une quelconque des revendications précédentes dans lequel le sujet (42) est un humain, un animal ou une plante vivants.

13. Procédé selon l'une quelconque des revendications précédentes dans lequel les images sont acquises par un procédé choisi parmi l'imagerie par résonance magnétique, la tomodensitométrie, la tomographie à émission de positron, la tomodensitométrie par émission de photon unique, la médecine nucléaire, l'échographie, la radiographie et l'imagerie optique.

14. Programme informatique comprenant un moyen de code de programme pour exécuter les étapes de la revendication 1 consistant à enregistrer (402) la pluralité d'images séparées dans le temps ensemble pour faire correspondre des emplacements dans les images les uns aux autres ; à mesurer (404) à partir des images enregistrées le comportement dans le temps en un emplacement dans le sujet (42) ; à adapter (404) le comportement dans le temps mesuré à un modèle du comportement dans le temps attendu et à calculer (406) le niveau de concordance entre eux en tant que mesure de la qualité de l'enregistrement des images séparées dans le temps.

15. Programme informatique selon la revendication 14 comprenant en outre un moyen de code de programme pour exécuter les étapes selon l'une quelconque des revendications 3 à 10.

16. Support d'enregistrement informatisé portant un programme informatique selon la revendication 14 ou la revendication 15.

17. Dispositif de traitement d'image médicale dynamique (46) adapté pour exécuter les étapes de la revendication 1 consistant à enregistrer (402) la pluralité d'images séparées dans le temps ensemble pour faire correspondre des emplacements dans les images les uns aux autres ; à mesurer (404) à partir des images enregistrées le comportement dans le temps en un emplacement dans le sujet (42) ; à adapter (404) le comportement dans le temps de l'agent d'imagerie (44) à un modèle du comportement dans le temps attendu et à calculer (406) le niveau de concordance entre eux en tant que mesure de la qualité de l'enregistrement des images séparées dans le temps.

18. Dispositif de traitement d'image médicale dynamique (46) selon la revendication 17, adapté en outre pour exécuter les étapes selon l'une quelconque des revendications 4 à 11.
